# EUROPEAN PATENT APPLICATION

(11) **EP 2 136 155 A1**
(43) Date of publication of application: **23.12.2009**
(21) Application number: 08736725.6
(22) Date of filing: 07.03.2008
(51) Int. Cl.: F24J 2/54

(54) **DUAL-AXIS SOLAR TRACKER ON A ROLLING PLATFORM, INCLUDING TWO PANEL HOLDERS**

(30) Priority: 09.03.2007 ES 200700534 U
(71) Applicant: Magán De La Rocha, Justino, 45005 Toledo (ES)
(72) Inventor: Magán De La Rocha, Justino, 45005 Toledo (ES)
(86) International application number: PCT/ES2008/000128
(87) International publication number: WO 2008/110644

(57) **Abstract**

The invention relates to a solar tracker for photovoltaic panels, having a system for orienting same along two perpendicular axes and including a supporting platform provided with motorised wheels and at least two solar panels holders. The solar tracker platform comprises straight lattice girders having suitable dimensions for conventional transport, a central shaft which receives the horizontal stresses and horizontal bracing elements which prevent horizontal deformations and render the assembly vertically flexible. The solar panel holders are coupled to the platform such that they can rotate about a horizontal axis and said holders include a doble guide system, provided on the frame and the purlins, in order to simplify mounting operations.

## Description

The invention presented here is a solar tracker for photovoltaic panels, with an orientation system across two perpendicular axes, and supported by means of a rolling platform on a horizontal surface.

The peculiar feature of the tracker is its support platform, which is composed of triangular girders that join with pillars. The dimensions of the girders are suited to conventional transport, and they require only a minimum of operations to be set up in the countryside. To increase the capacity of the solar panels the platform incorporates more than one panel-board . Below the platform there is a rolling track, which even can be the ground, due to the vertical flexibility of the structure. On the panel-boards there is a double guide system (in the frame and straps) that simplifies mounting.

### BACKGROUND OF THE INVENTION

The move towards a lowering of prices in the photovaltic energy market makes it necessary to search for systems that will improve output. For this reason it is expected a bigger use of sun trackers in generation plants, which will increase as its reliability is increased and its cost is reduced. Otherwise, the tendency towards the use of concentration systems in order to increase output involves the use of sun trackers.

The alignment of a piece of equipment with a star has resulted for a long time in distinct types of mountings existing for astronomy.

Like telescopes, the trackers currently on the market use two systems of alignment: equatorial (where one of the axes is parallel to the Earth's axis of rotation); and altazimuthal (where one of the axes is coincidental with the vertical position).

Both of these systems are good for small trackers. When however the boards for solar panels are in order 20m² in size, the equatorial system is not very practical due to its need for high structures in order to permit the boards to turn without touching the ground.

The altacimutal system is made up of two basic types: the mono-post and the rolling structure. These differ in the way they support the panel-boards. The first uses a post anchored in the earth, and the second uses a tri-dimensional structure with rollers that move around a circular track. In both types the support constitutes a vertical axis and above this the panel-board that turns on a horizontal axis.

The wind is the load that determines the size of the panel-boards. The boards have surface pressure of 90 Kg/m² on the panels for winds of 125 Km/h and wind load coefficient of 1.2

The mono-post system only has two support points. One is at the head of the post for the horizontal axis and the other is at the base of the vertical axis. This system of support is insufficient for the wind loads that are produced around big structures. It stays limited only to boards between 35 and 70 m², and is used almost exclusively with them.

The rolling structure system is on the other hand not limited in how many support points it has and these can be positioned at the required distance, in order to with moderate forces, the support points can absorb the overspill and torque caused by the wind. The system's field of application is for boards of big surface and it is used almost exclusively for surfaces more than 100 m² in size.

It is because of these big dimensions of the rolling structures, there are difficulties which do not merit the existing tracker models. Of these difficulties we can highlight the following:
- The trackers are complex structures with elements of grand dimension that need special transport to move/turn around, and require numerous operations to be mounted in the countryside.
- There is a disadvantageous relationship between the panel surface and the weight of the structure (where the weight of the structure is more than 40 Kg per m² per the surface of the panels)
- The vertical rigidity of the structure requires uniformity in the rolling track. This is difficult to comply with in big tracks, and these require the installation of a levelling rail.
- The mounting of the panel-boards is slow and complicated and the size of the boards makes it difficult to access both of the sides.

It is possible to simplify the requirements of the rolling track by using rollers with a suspension system, as in model U-200502495, or with a structure with only 3 vertical supports, following model U-200602830 (both by the same inventor). However, there is currently the need for a more efficient solar tracker. This is a tracker whose characteristics easily facilitate transportation and mounting; which has a good relation between the surface of the panels and the weight of the structure; and which further reduces the need for uniformity in the rolling track.

### SUMMARY OF THE INVENTION

It is the object of the present invention to resolve the problems presented by the existing solar trackers. The invention proposes a tracker with two axes following independent claim 1. In dependent claims 2-12, preferred embodiments are defined in the solar tracker with two axes according to the present invention

The solar tracker is composed of a rolling support platform that turns around a central vertical axis and is equipped with motorised rollers. The tracker has at least two boards for solar panels that join to the support platform so that each one can rotate on the horizontal axes.

The following refers to a preferred realisation of the invention that allows for two boards for solar panels.

The platform is composed of a series of latticed girders with dimensions adapted to conventional transport; a central vertical axis; and pillars and bracing to stop horizontal deformities, without reducing the vertical flexibility of the whole assembly.

The platform has the shape of a straight rectangular or square-based prism with support pillars at the corners of the base, and is equipped with motorised rollers in its inferior section. The support pillars are joined together by triangular girders (for the example of the Warren type). An additional intermediate triangular girder is also in place for the union of the platform with the central axis. This additional girder joins in the centre of the structure with two of the other triangular girders. It does this by means of a pillar at each extreme. The additional girder serves to support the axis for the panel-boards. The union is thus completed with the central axis. The union is made rigid by the lateral girders and by braces going from the corner support pillars.

The system/tracker is of maximum simplicity and permits for rapid and safe mounting in the countryside. This is thanks to its using screws, or a system of lugs and bolts. Furthermore, the dimensions of the support platform (preferably between 10 - 14 m at the sides) give the system stability against overturning and twisting (braked wheels)

The dimensions of the platform permit for the placement of two solar-panel-boards, one on the front edge and the other on the opposite. This is done in such a way that one board is placed vertically in respect of the other to prevent the formation of shadows. The boards for the solar panels are joined to the support platform and they have the capacity to rotate on the horizontal axes. They also allow for guides to facilitate the positioning of the solar panels.

In the structure there is a vertical overlap between the two boards of approximately 25%. This diminishes the surface exposed to the wind and the height of the resultant wind load, reducing around 35% the overspill moment there would be on a single board of double height. This optimises the use and the efficiency of the structure, getting the maximum relation between its weight and the panel surfaces available - 30 Kg per m² of the panel surface.

The design of the support platform has a form that allows for certain vertical flexibility. This is done in order to reduce the needs for a rolling track. In contrast to other support in the state of the art, it does not allow for any resisting element or latticed girder to be pass in the 3 supports.
The configuration between the supports on the corner, the central axe, and horizontal bracing, provide the vertical flexibility into the structure. The platform can adapt to any small irregularities in the rolling track, thus diminishing the need for uniformity. There is then no need for a metal rail to smooth, balance or level out the track, as required in other structures.

The central axis is responsible for absorbing the horizontal loads of the structure.

In one possible realisation of the invention, the central axis has a vertical support - preferably an axial bearing. This vertical support is in place to take part of the weight of the structure and alleviate the weight absorbed by the rollers. Advantageously, with the vertical support the central axis supports between 30% and 50% of the weight of the tracker. This eases the weight on the rollers and prevents them from splitting the rolling track. Here, the rollers on the rolling track can deviate up to 1cm in respect of the horizontal plane.

In a second, alternative realisation the union of the platform with the central axis is a 'sliding' union - 'sliding' in the vertical sense. Here, the axis has (preferably) a high protection/security catch or break against strong winds. The maximum irregularity permissible for the tracker is up to 5cm. In favourable conditions the concrete track can be completely eliminated and the tracker supported directly above natural terrain.

A problem with the mounting any boards of big dimensions is that they need turning operations to get access to both sides. To prevent this, a double guide system has been designed. This permits mounting from the under-side of the boards where the electrical connections are in place.

The boards for the solar panels are composed of a frame, and straps equipped with panel-guides to facilitate the positioning of the solar panels. Furthermore, the straps are fixed lengthways to the frame. This is done in such a way that they allow for displacement and adaptation to the various different types of solar panels currently on the market.

The system of panel-guides facilitates rapid mounting, and the fixing system prevents any displacement or knocking that can take place to the panels.

The panel-boards are placed at the extremes of the structure and are positioned on top of the frames. These rotate, preferably by using the crank connecting-arm rod system which is activated by an 'endless' screw. Other appropriate turning systems can however be used.

The tracking movements (of the boards on the two axes) are automised at daybreak and finish when it gets dark. The tracker then returns to its initial position - the inverse to what it follows during the day. It remains stationary until the start of the next tracking cycle.

### BRIEF DESCRIPTION OF THE DRAWINGS

Figure 1 shows a 'blown-up' perspective of the solar tracker, with the main component parts: a rolling platform and two boards for solar panels
Figure 2 is a lateral view of the tracker following the outline shown in Figure 1
Figure 3 shows the system of guides for the fixing of the panels

### DETAILED EXPOSITION OF A MODE OF REALISATION

The numbers given to each part of the system are used in all the diagrams. Following this guide, the tracker is made up of a platform and at least two boards for solar panels

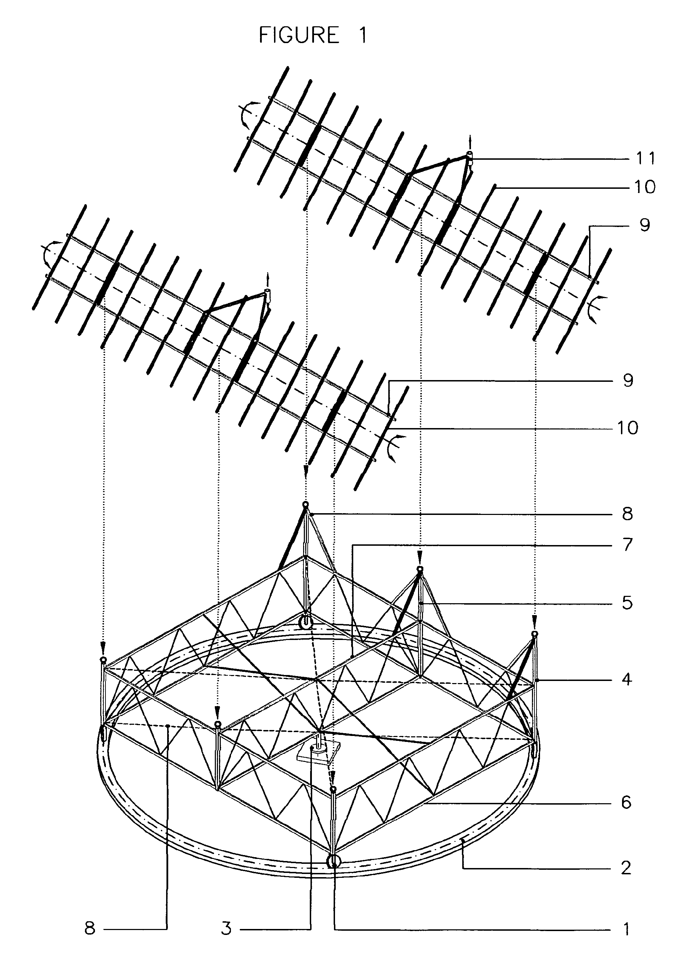

Figure 1 shows a preferred outline of the tracker, with a support platform that has a square base, and two boards for solar panels. The platform has motorised rollers (1) at its corners. These circulate on a track (2) that takes the form of a circular crown. The tracker turns on this track around the central vertical axis (3), which is anchored in a foundation in the earth.

The rolling track (2) is achieved by using a concrete of low plasticity, which is put in place without any form, and which incorporates a metal band reinforcement. In favourable conditions the solar tracker can be supported directly above the natural terrain improved with either lime or cement.

The platform is dismountable and is composed of latticed girders, and pillars (4) at its corners. The girders (6) fix to the pillars by a system of lugs and bolts, or one of screws, with an intermediate girder (7) to join the central axis (3) to the structure. On the front and rear sides of the platform there are intermediate pillars (5) to help support the panel-boards. In order to give the whole operation rigidity, bracings (8) are used. The horizontal ones go from the central axis to the corner pillars (4). They give the platform the vertical flexibility it needs in order to adapt for irregularities in the rolling track.

Therefore, the invention incorporates a support platform with six pillars joined by five triangular girders of equal length. The rods are preferably 10, 12 or 14 m in length and their edges are no longer than 2.50 m in length. This means that they can be finished in a workshop and do not require special transport either for movement to the countryside, or for being galvanized.

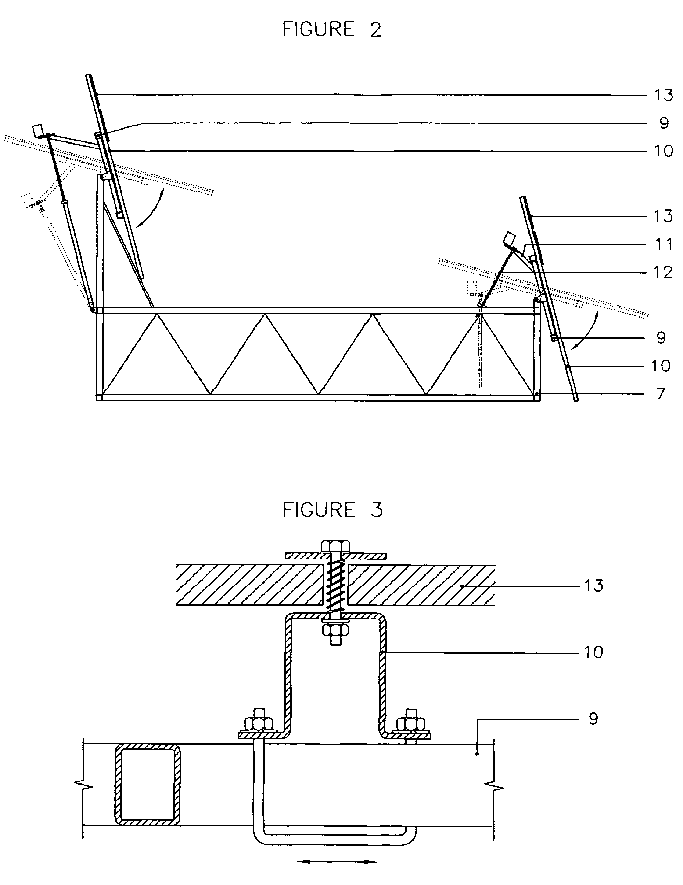

Figure 2 is a lateral view of the solar tracker following the preferred outline as shown in Figure 1. This figure appreciates the disposition of the two boards - their separation and their vertical displacement in respect of one another. The separation and the difference in height between the two boards is necessary to prevent shadows forming between them from small elevations towards the sun (between 10 and 15°).

The panel-boards turn on the horizontal axes and they are made up of a frame (9) that has sliding straps (10) that allow for guides to position the solar panels (13). Figure 2 also shows the crank connecting-arm system (11). This is activated by an 'endless' screw (12), one suitable for the turning of the boards. In Figure 2 the outlines show the 'safety' position (the panels are horizontal) with the screw vertical and the crank moved back.

Figure 3 shows the system of guides used for the mounting of the panels. The guides are made up of an 'Omega' section with a high level locking disc. The sections are kept open by a spring positioned on each screw, joining each disc and section. When the panels are mounted, the screws tighten and lock the guides in place, without any looseness and preventing any knocks or jolts. In a preferred realisation of the tracker the guides are situated on sliding supports. These supports are fixed to the frame in a movable form of the board, for example by brackets. This type of support permits for adaptation to the different types of panels currently existent on the market.

The structure is (preferably) made of metal, with open sections (either laminated or shaped) or hollow sections, where extreme openings are left for galvanisation. The galvanisation is achieved using screwed-down joints, or by means of lugs and bolts. This makes the whole assembly demountable.

The whole structure has been pre-dimensioned with a platform 14m at the sides and with panel-boards of 20m in length and 7 in height, with a surface area of 280 m² across the photovaltic panels. The measurements are varied when and where is necessary. This is to achieve maximum usage of the system.

## Claims

1. Solar tracker with two axes on a rolling platform equipped with motorised rollers, **characterised** as:
The platform is achieved using straight latticed girders (6, 7) that have dimensions adapted to conventional transport; a central axis (3) that absorbs the horizontal loads and bracings (8) to prevent horizontal deformations and to give vertical flexibility to the assembly.
The solar tracker is also made up of at least two boards for solar panels, joined to the platform, with the capacity to rotate above a horizontal axis, with supports (10) that are fixed to a frame (9) that moves to be displaced or adapted to the measurements of the panels (13). The supports also allow for straps for guides (10). These guides facilitate the placement of the solar panels.

2. Solar tracker with two axes on a rolling platform equipped with motorised rollers, following claim (1), **characterised** because the base of the platform is square or rectangular, and because the tracker has two boards situated on parallel sides of the platform.

3. Solar tracker with two axes on a rolling platform equipped with motorised rollers, following claim (1), **characterised** because the boards are displaced vertically in respect to one another.

4. Solar tracker with two axes on a rolling platform equipped with motorised rollers, following claim (2), **characterised** because each one of the two boards is supported by two corner pillars (4) and by at least one intermediate pillar (5).

5. Solar tracker with two axes on a rolling platform equipped with motorised rollers, following claim (1), **characterised** because the rotation of the panel-boards is achieved by means of a crank connecting-arm system (11), activated by an 'endless' screw (12).

6. Solar tracker with two axes on a rolling platform equipped with motorised rollers, following claim (1), **characterised** because the straps (10) are fixed to the panel-board frame (9) by means of clamps.

7. Solar tracker with two axes on a rolling platform equipped with motorised rollers, following claim (1), **characterised** because in the structure of the union between the supports, there is no resisting element passing across three supports.

8. Solar tracker with two axes on a rolling platform equipped with motorised rollers, following claim (1), **characterised** because the structure uses horizontal bracings (8) between the central axis (3) and the corner pillars (4) in order to give vertical flexibility to the solar tracker.

9. Solar tracker with two axes on a rolling platform equipped with motorised rollers, following claim (1), **characterised** because the central axis (3) has a vertical support to alleviate the weight on the rollers

10. Solar tracker with two axes on a rolling platform equipped with motorised rollers, following claim (9), **characterised** because the vertical support for the central axis (3) is an axial bearing.

11. Solar tracker with two axes on a rolling platform equipped with motorised rollers, following claim (1), **characterised** because the union of the platform with the central axis (3) is a 'sliding' union.

12. Solar tracker with two axes on a platform equipped with motorised rollers following claim 11, **characterised** because the central axis has a high security catch or break.
